# EUROPÄISCHE PATENTSCHRIFT

(11) **EP 1 245 267 B1**
(45) Veröffentlichungstag und Bekanntmachung des Hinweises auf die Patenterteilung: **24.05.2006**
(21) Anmeldenummer: 02007482.9
(22) Anmeldetag: 02.04.2002
(51) Int. Cl.: B01D 53/053

(54) **Modulare Sauerstoff-Versorgungsanlage und Verfahren und Vorrichtung zur Steuerung der Anlage**
Process and device for controlling modular oxygen delivery system
Système modulaire de distribution d'oxygène et procédé et dispositif de commande pour ce système

(30) Priorität: 29.03.2001 DE 10115620
(43) Veröffentlichungstag der Anmeldung: 02.10.2002
(73) Patentinhaber: F. Stephan GmbH, 56412 Gackenbach (DE)
(72) Erfinder: Mainusch, Georg, 56076 Koblenz (DE)
(74) Vertreter: Jostarndt, Hans-Dieter

(56) Entgegenhaltungen:
- EP-A- 0 447 029
- DE-C- 19 829 957
- DE-U- 29 605 889
- US-A- 3 659 399
- US-A- 5 593 478
- US-A- 5 711 787
- US-A- 5 917 135
- US-A- 5 924 419
- US-A- 5 935 297
- US-B1- 6 395 065

## Beschreibung

Die Erfindung betrifft eine Anlage zur Sauerstoffversorgung, wobei mehrere Sauerstoffgeneratoren bedarfsabhängig einen Vorratsbehälter speisen, der die Versorgung des Verbrauchers übernimmt. Der Sauerstoff wird innerhalb der einzelnen Module der Anlage im Druckwechseladsorptionsverfahren erzeugt. Die Erfindung betrifft ferner die bedarfsabhängige Steuerung einer modularen Anlage zur Sauerstoffversorgung.

Zur Versorgung von Krankenhäusern, Arztpraxen oder Heimtherapieplätzen mit Sauerstoff ist es bekannt, stationäre oder mobile Sauerstoffgeneratoren zu verwenden. Derartige Generatoren zur Eigenproduktion von Sauerstoff bieten gegenüber der Versorgung mit Flüssigsauerstoff einige Vorteile, da sie vor allem eine aufwendige Transportlogistik von Druckgasflaschen erübrigen. Bei der Versorgung mit Druckgasflaschen können außerdem Zustände eintreten, in denen ein Patient nicht mit der erforderlichen Menge an Sauerstoff versorgt wird. Beispielsweise können Probleme beim Anschluss neuer Flaschen auftreten, Leckagen im System entstehen oder Reserveflaschen nicht rechtzeitig am Versorgungsort zur Verfügung stehen.

Aus den genannten Gründen werden zur Eigenproduktion von Sauerstoff häufig PSA-Sauerstoffkonzentratoren verwendet. Als PSA-Sauerstoffkonzentrator werden Anlagen bezeichnet, die nach dem Druckwechseladsorptionsverfahren (Pressure-Swing-Adsorption) Sauerstoff aufkonzentrieren. Dabei werden Molekularsiebe (Zeolithe) eingesetzt, die Stickstoff aus der angesaugten Umgebungsluft adsorbieren, während Sauerstoff und Argon in der Luft verbleiben. Der Vorgang von Adsorption und nachfolgender Desorption zur Regenerierung des Siebes wiederholt sich periodisch bei unterschiedlichen Drücken, und das am Ende des Verfahrens aufkonzentrierte Gasgemisch besteht typischerweise aus etwa 95% Sauerstoff, 4% Argon und geringen Mengen an Reststickstoff. Je nach Einsatzgebiet und entsprechender Volumenstromanforderung werden PSA-Anlagen unterschiedlicher Größe gebaut und eingesetzt.

EP-A-0 447 029 offenbart eine Anlage zur Sauerstofferzeugung nach dem Druckwechseladsorptionsverfahren, die zwei Sauerstoffgeneratoren und einen Vorratsbehälter umfaßt. Weiterhin ist eine Vorrichtung zur Steuerung dieser Anlage offenbart, wobei eine Einheit den Druck im Vorratsbehälter mit Schwellenwertern vergleicht, ein Signal generiert und eine weitere Einheit die Sauerstoffgeneratoren ein- und ausschaltet.

Nachteilig an derartigen Anlagen ist, dass sie die Forderung nach Redundanz der ISO 10083 nicht erfüllen. Aufgabe der Erfindung ist es deshalb, eine PSA-Anlage bereitzustellen, die einem Verbraucher sicher und zuverlässig Sauerstoff zur Verfügung stellt.

Erfindungsgemäß wird diese Aufgabe dadurch gelöst, dass mehrere PSA-Generatoren zu einer Versorgungsanlage zusammengeschaltet werden. Die einzelnen Module speisen dabei bedarfsabhängig einen oder mehrere Vorratsbehälter, die beispielsweise das Sauerstoff-Versorgungsnetz eines Krankenhauses speisen. Zur Versorgung einer Klinik mit 90 bis 95%-igem Sauerstoff werden typischerweise Volumenströme in der Größenordnung von einigen hundert l/min benötigt. Der Sauerstoff liegt dabei normalerweise bei einem Druck von 5 bar vor.

Anstelle einer einzigen Anlage, die auf die geplante Größenordnung ausgerichtet ist, werden erfindungsgemäß mehrere Untereinheiten zusammengeschaltet, die gemeinsam veränderliche Volumenströme an Sauerstoff bereitstellen können. Diese Module produzieren beispielsweise jeweils etwa 10 l/min. Jedes Modul besteht dabei aus einem ersten

Kompressor zum Antrieb des Sauerstofferzeugers, einem PSA-Sauerstofferzeuger und einem weiteren Kompressor zur Nachverdichtung des erzeugten Gasgemisches. Im Vorratstank, der durch die Module gespeist wird, werden vorzugsweise Drücke von 6 bis 7 bar eingestellt. Zur Versorgung von Patienten mit Sauerstoff liegt der gesetzlich festgelegte Mindestdruck bei 2,8 bar, so dass der Druck im Vorratstank gegebenenfalls auf 3,5 bar reduziert werden kann.

Der modulare Aufbau der erfindungsgemäßen Anlage hat gegenüber herkömmlichen stationären Anlagen einige Vorteile. Vor allem gewährleistet die modulare Anlage mehrfache Redundanz. Eine Anlage für 100 l/min würde aus mindestens zehn Modulen mit einer Leistung von jeweils 10 l/min aufgebaut, und bereits mit einer oder wenigen zusätzlichen Einheiten lässt sich eine Anlage mit Redundanz realisieren, die eine sichere und unterbrechungsfreie Sauerstoffversorgung gewährleistet. Fällt ein Modul aus, führt dies nicht dazu, dass die gesamte Sauerstofferzeugung unterbrochen wird, sondern dass ein Ersatzmodul zugeschaltet wird.

Die erfindungsgemäße Anlage bietet darüber hinaus technische Vorteile, da wartungsfreundlichere Komponenten eingesetzt werden können. Beispielsweise können ölfreie Kompressoren verwendet werden, die auch zusätzliche Filter überflüssig machen. Außerdem können kleine PSA-Sauerstoffkonzentratoren im Vergleich zu größeren Anlagen mit einem effizienter arbeitenden Typ von Zeolithen gefüllt werden und erreichen daher eine höhere Sauerstoffkonzentration.

Der modulare Aufbau der Gesamtanlage bietet außerdem die Möglichkeit einer bedarfsabhängigen Steuerung, die nur soviele Einheiten zuschaltet, wie zur Deckung des aktuellen Bedarfs erforderlich sind. Dadurch wird eine Energieeinsparung erreicht.

Die Erfindung wird nachfolgend anhand von Zeichnungen näher erläutert:
**Fig.1** zeigt den Aufbau der erfindungsgemäßen modularen Anlage zur Sauerstoffversorgung.
**Fig.2** zeigt den Aufbau eines PSA-Moduls und die Verbindung mit einem Vorratsbehälter und einem Verbraucher.

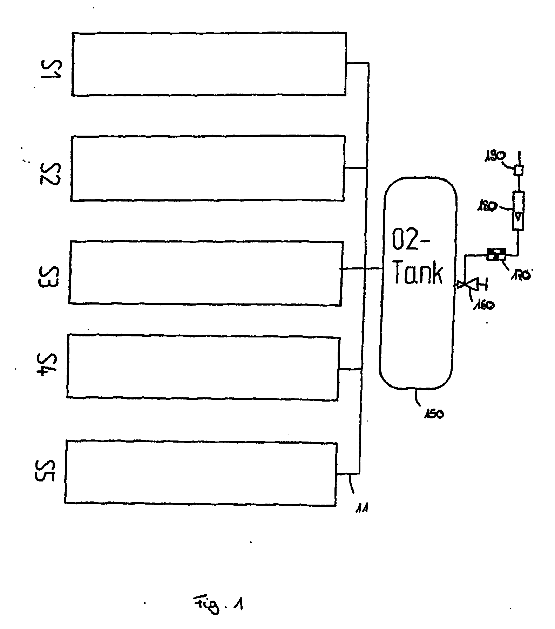

Fig.1 zeigt den Aufbau der erfindungsgemäßen Anlage zur Sauerstoffversorgung, die aus einzelnen zusammengeschalteten Modulen besteht. In der Zeichnung sind beispielsweise fünf Module S1 bis S5 dargestellt, die über Leitungen 11 mit dem Vorratsbehälter 150 verbunden sind. Der in den Modulen erzeugte 90 bis 95%-ige Sauerstoff wird in einem Sauerstofftank 150 gesammelt und an den Verbraucher weitergeleitet. Bei dem Verbraucher kann es sich beispielsweise um ein Sauerstoffverteilungsnetz handeln. Es ist zweckmäßig, zwischen den Vorratstank 150 und den Verbraucher einen Druckminderer 160, einen Bakterienfilter 170, einen Sensor 180 zur Durchflussmessung und einen Sensor 190 zur Konzentrationsmessung zu schalten. Es kann außerdem vorteilhaft sein, mehrere Vorratsbehälter zu speisen und zur Versorgung einzusetzen.

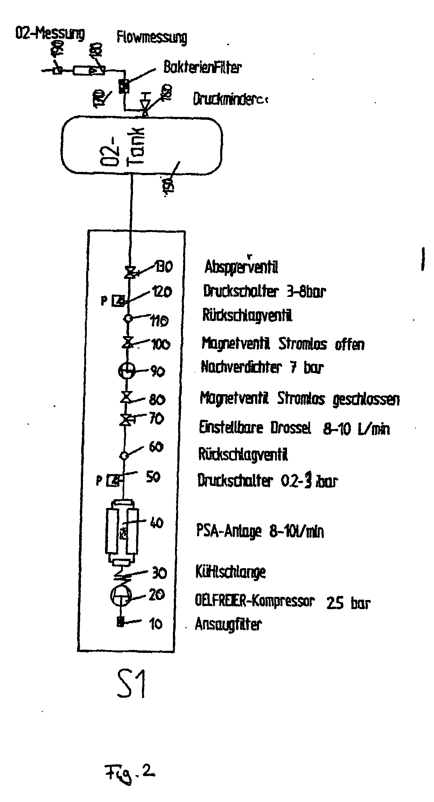

Fig.2 zeigt eine bevorzugte Ausführungsform des erfindungsgemäßen PSA-Moduls und die Verbindung mit dem Vorratsbehälter und dem Verbraucher. Das Modul S1 ist in dieser Ausführungsform wie folgt aufgebaut: Ein erster Kompressor 20 saugt über einen Filter 10 Luft aus der Umgebung an und verdichtet sie vorzugsweise auf einen Druck im Bereich von 1,5 bis 2,5 bar. Die Filtration der Luft ist erforderlich, da Staub die Molekularsiebe innerhalb des nachgeschalteten PSA-Konzentrators irreversibel schädigen kann. Der PSA-Konzentrator 40 innerhalb des Moduls wird über einen Kühler 30 von der angesaugten Luft angetrieben. Der kondensierte Wasserdampf der Luft wird abgezogen, da Wasser die Adsorptionsfähigkeit der Molekularsiebe im PSA-Konzentrator vermindert.

Der PSA-Konzentrator 40 arbeitet nach dem bekannten Verfahren der Druckwechseladsorption. Dabei wird durch Verwendung eines Molekularsiebes (Zeolithes) die physikalische Abscheidung von Stickstoff aus der Raumluft ermöglicht. Das mit der Anlage erzeugte aufkonzentrierte Gasgemisch enthält typischerweise etwa 90-95% Sauerstoff, sowie Argon und Reststickstoff. Die interne Steuerung des PSA-Konzentrators erfolgt über einen Druckschalter 50. Das erzeugte Gasgemisch wird über ein Rückschlagventil 60 und eine Drossel 70 zur Einstellung des Durchflusses und ein Magnetventil 80 zur Steuerung zu einem weiteren Kompressor 90 geleitet. Der Kompressor 90 verdichtet das Gasgemisch auf vorzugsweise 4 bis 7 bar. Diese Nachverdichtung wird durch den Druckschalter 120 gesteuert. Über ein zweites Magnetventil 100, ein Rückschlagventil 110 und ein manuell betätigtes Absperrventil 130 wird das verdichtete Gemisch in den Vorratstank 150 geleitet.

Zur Einspeisung in einen Vorratstank 150 kann eine beliebige Anzahl an Modulen zusammengeschaltet werden. Besonders vorteilhaft ist es, wenn der Vorratstank den angereicherten Sauerstoff über einen Druckminderer 160, einen Bakterienfilter 170, einen Sensor 180 zur Durchflussmessung und einen Sensor 190 zur Konzentrationsmessung in das Sauerstoffverteilungsnetz einspeist.

In einer besonders bevorzugten Ausführungsform der Erfindung ist eine bedarfsgerechte Steuerung der Anlage vorgesehen. Dabei schaltet die Ansteuerung nur so viele Einheiten ein, wie zur Deckung des aktuellen Bedarfs an Sauerstoff erforderlich sind. Zur Bestimmung des Bedarfes wird der Druck im Vorratstank gemessen. Oberhalb eines Maximalwertes schaltet eine Steuereinheit alle PSA-Module ab, da der Vorrat an gespeichertem Sauerstoff ausreichend ist. Je nach Anzahl der angeschlossenen Module wird außerdem eine entsprechende Anzahl weiterer Druckschwellwerte festgesetzt. Sinkt der Druck im Vorratsbehälter unter den ersten oberen Schwellwert, schaltet eine Einheit das erste Modul zur Sauerstofferzeugung ein. Bei einer weiteren Druckabnahme schaltet die Einheit sukzessiv die anderen Generatoren ein. Alternativ wird in einer weiteren Ausführungsform der Erfindung die Sauerstoffentnahme aus dem.Tank in Form des Durchflusses gemessen. Dieser Durchfluss steht für den aktuellen Bedarf an Sauerstoff. Auch hier schaltet eine Einheit bei abgestufter Überschreitung bestimmter Schwellenwerte für den Durchfluss sukzessiv die einzelnen Module ein. In beiden Ausführungsformen ist es vorteilhaft, dass eine Steuereinheit die Reihenfolge der Einschaltungen zeitlich verändert, um eine möglichst gleichmäßige Auslastung der Module zu erreichen.

### Bezugszeichenliste:

- S1-S5: Module

- 10: Ansaugfilter
- 11: Leitungen
- 20: Ölfreier Kompressor 1,5 bis 2,5 bar
- 30: Kühler
- 40: PSA-Konzentrator
- 50: Druckschalter; 0,2 bis 3 bar
- 60: Rückschlagventil
- 70: Drossel
- 80: Magnetventil
- 90: Kompressor, Nachverdichter 4 bis 7 bar
- 100: Magnetventil
- 110: Rückschlagventil
- 120: Druckschalter
- 130: Absperrventil
- 150: Vorratstank, Vorratsbehälter, Sauerstofftank
- 160: Druckminderer
- 170: Bakterienfilter
- 180: Sensor zur Durchflussmessung
- 190: Sensor zur Konzentrationsmessung

## Patentansprüche

1. Anlage zur Sauerstofferzeugung umfassend mindestens zwei Module (S₁, ..., S₅), einen Vorratsbehälter (150) und eine Steuer einheit,
**dadurch gekennzeichnet,**
**dass** die mindestens zwei Module (S1,...,S5) einen Vorratsbehälter (150) speisen, wobei jedes Modul (S1,...,S5) einen ersten Kompressor zum Antrieb eines nach dem Druckwechselabsorptionsverfahren arbeitenden Sauerstoffgenerators (40), den Sauerstoffgenerator (40) und einen zweiten Kompressor zur Nachverdichtung eines erzeugten Gasgemisches enthält und dass die Steuereinheit eine Druckmessung in dem Vorratsbehälter (150) vornimmt und die Module (S1,...,S5) voneinander unabhängig in Abhängigkeit von dem Ergebnis der Druckmessung in dem Vorratsbehälter (150) zur bedarfsabhängigen Speisung des Vorratsbehälters (150) ein- und ausschaltet.

2. Anlage nach Anspruch 1, weiterhin umfassend einen Dreckminderer (160), einen Bakterlen filter (170), einen Sensor zur Durchflussmessung (180) und einen Sensor zur konzentrationsmessung (190),
**dadurch gekennzeichnet,**
**dass** das Gasgemisch vom Vorratstank (150) über einen Druckminderer (160), einen Bakterienfilter (170), einen Sensor zur Durchflussmessung (180) und einen Sensor zur Konzentrationsmessung (190) zum Verbraucher geführt wird.

3. Anlage nach einem oder beiden der Ansprüche 1 und 2, weiterhin umfassend eine Einheit,
**dadurch gekennzeichnet,**
**dass** die Einheit den Durchfluss vom Vorratsbehälter (150) zum Verbraucher mit vorliegenden Schwellenwerten vergleicht und ein Signal generiert.

4. Anlage nach einem oder mehreren der Ansprüche 1 bis 3,
**dadurch gekennzeichnet,**
**dass** der erste Kompressor (20) über einen Ansaugfilter (10) Luft ansaugt und diese verdichtet.

5. Anlage nach Anspruch 4,
**dadurch gekennzeichnet,**
**dass** der erste Kompressor (20) Luft auf 1,5 bis 3 bar verdichtet.

6. Anlage nach einem oder mehreren der Ansprüche 1 bis 5,
**dadurch gekennzeichnet,**
**dass** über einen kühler (30) Luft in den PSA-Sauerstofferzeuger (40) geleitet wird.

7. Anlage nach einem oder mehreren der Ansprüche 1 bis 6,
**dadurch gekennzeichnet,**
**dass** die Module (S1,...,S5) über einen Druckschalter (50) gesteuert werden.

8. Anlage nach einem oder mehreren der Ansprüche 1 bis 7, weiterhin umfassend ein Rückschlagventil (60), eine Drossel (70) und ein Magnetventil (80)
**dadurch gekennzeichnet,**
**dass** ein Gasgemisch vom PSA-Sauerstofferzeuger (40) über das Rückschlagventil (60) , die Drossel (70) und das Magnetventil (80) zum Kompressor (90) geführt wird.

9. Anlage nach einem oder mehreren der Ansprüche 1 bis 8,
**dadurch gekennzeichnet,**
**dass** der Kompressor (90) von einem Druckschalter (120) gesteuert wird.

10. Anlage nach einem oder mehreren der Ansprüche 1 bis 9,
**dadurch gekennzeichnet,**
**dass** der Kompressor (90) das Gasgemisch auf 4 bis 7 bar verdichtet.

11. Anlage nach einem oder mehreren der Ansprüche 1 bis 10, weiterhin umfassend ein Auschlagventil (110) und ein Absperventil (130),
**dadurch gekennzeichnet,**
**dass** das Gasgemisch über das Magnetventil (80), das Anschlagventil (110) und das Absperrventil (130) zum Vorratstank (150) geführt wird.

12. Verfahren zur Steuerung einer Anlage zur Sauerstofferzeugung,
**dadurch gekennzeichnet,**
**dass** mindestens zwei Module, die jeweils aus einem ersten Kompressor, der einen nach dem Druckwechselabsorptionsverfahren arbeitenden Sauerstoffgenerator antreibt, dem Sauerstoffgenerator und einem zweiten Kompressor, der ein erzeugtes Gasgemisch nachverdichtet, bestehen, die einen Vorratsbehälter (50) speisen, dass in dem Vorratsbehälter (50) eine Druckmessung erfolgt und dass eine Steuerungsschaltung in Abhängigkeit von dem gemessenen Druck die Module bedarfsabhängig voneinander unabhängig ein- und ausschaltet.

13. verfahren nach Anspruch 12,
**dadurch gekennzeichnet,**
**dass** mindestens ein weiterer Schwellwert für den Durchfluss vom Vorratsbehälter (50) zum Verbraucher vorliegt.

14. Verfahren nach einem oder beiden der Ansprüche 12 und 13,
**dadurch gekennzeichnet,**
**dass** bei Unterschreiten eines Schwellwertes für den Durchfluss vom Vorratsbehälter (150) zum Verbraucher ein Modul eingeschaltet wird.

15. Verfahren nach einem oder mehreren der Ansprüche 12 bis 14,
**dadurch gekennzeichnet,**
**dass** ein Maximalwert für den Druck im Vorratsbehälter (150) vorgegeben ist.

16. Verfahren nach einem oder mehreren der Ansprüche 12 bis 15,
**dadurch gekennzeichnet,**
**dass** oberhalb des Druckmaximalwertes alle Module der Anlage abgeschaltet sind.

17. Verfahren nach einem oder mehreren der Ansprüche 12 bis 16,
**dadurch gekennzeichnet,**
**dass** ein Maximalwert für den Durchfluss vom Vorratsbehälter (150) zum Verbraucher vorliegt.

18. Verfahren nach einem oder mehreren der Ansprüche 12 bis 17,
**dadurch gekennzeichnet,**
**dass** mindestens ein weiterer Schwellwert für den Druck im Vorratsbehälter (150) vorgegeben ist.

19. Verfahren nach einem oder mehreren der Ansprüche 12 bis 18,
**dadurch gekennzeichnet,**
**dass** bei Unterschreiten eines Druckschwellwertes ein Modul eingeschaltet wird.

20. Verfahren nach einem oder mehreren der Ansprüche 12 bis 19,
**dadurch gekennzeichnet,**
**dass** die Reihenfolge der Einschaltung von Modulen zeitlich veränderlich ist.

21. Anlage nach Anspruch 2,
**dadurch gekennzeichnet,**
**dass** der Vorratsbehälter (150) nach dem Verfahren der Ansprüche 12 bis 20 gespeist wird.

## Claims

1. A system for generating oxygen, comprising at least two modules (S1, ..., S5), a reservoir (150) and a control unit,
**characterized in that**
the at least two modules (S1, ..., S5) feed a reservoir (150), whereby each module (S1, ..., S5) comprises a first compressor to drive an oxygen generator (40) that functions according to the pressure swing absorption method, the oxygen generator (40) and a second compressor for the post-compression of a generated gas mixture, and **in that** the control unit carries out a pressure measurement in the reservoir (150) and switches the modules (S1, ..., S5), on and off independently of each other as a function of the result of the pressure measurement in the reservoir (150) for the demand-dependent feeding of the reservoir (150).

2. The system according to Claim 1, also comprising a pressure reducer (160), a bacteria filter (170), a sensor for flow measurement (180) and a sensor for concentration measurement (190),
**characterized in that**
the gas mixture is conveyed from the reservoir (150) to the consumer via a pressure reducer (160), a bacteria filter (170), a sensor for flow measurement (180) and a sensor for concentration measurement (190).

3. The system according to one or both of Claims 1 and 2, also comprising a unit,
**characterized in that**
the unit compares the flow rate from the reservoir (150) to the consumer with specified threshold values and generates a signal.

4. The system according to one or more of Claims 1 to 3,
**characterized in that**
the first compressor (20) draws in air via a suction filter (10) and compresses it.

5. The system according to Claim 4,
**characterized in that**
the first compressor (20) compresses air to a value of 1.5 to 3 bar.

6. The system according to one or more of Claims 1 to 5,
**characterized in that**
air is conveyed into the pressure swing absorption (PSA) oxygen generator (40) via a condenser (30).

7. The system according to one or more of Claims 1 to 6,
**characterized in that**
the modules (S1, ..., S5) are controlled by means of a pressure switch (50).

8. The system according to one or more of Claims 1 to 7, also comprising a non-return valve (60), a throttle (70) and a solenoid valve (80),
**characterized in that**
a gas mixture is fed from the pressure swing absorption oxygen generator (40) to the compressor (90) via the non-return valve (60), the throttle (70) and the solenoid valve (80).

9. The system according to one or more of Claims 1 to 8,
**characterized in that**
the compressor (90) is controlled by a pressure switch (120).

10. The system according to one or more of Claims 1 to 9,
**characterized in that**
the compressor (90) compresses the gas mixture to 4 to 7 bar.

11. The system according to one or more of Claims 1 to 10, also comprising a stop valve (110) and a shut-off valve (130),
**characterized in that**
the gas mixture is fed to the reservoir (150) via the solenoid valve (80), the stop valve (110) and the shut-off valve (130).

12. A method for controlling a system for oxygen generation,
**characterized in that**
at least two modules - each comprising a first compressor that drives an oxygen generator that functions according to the pressure swing absorption method, the oxygen generator and a second compressor that post-compresses a generated gas mixture - feed a reservoir (50), **in that** a pressure measurement is carned out in the reservoir (50) and **in that**, as a function of the measured pressure, a control circuit switches the modules, on and off independently of each other, in a demand-dependent manner.

13. The method according to Claim 12,
**characterized in that**
at least another threshold value exists for the flow rate from the reservoir (50) to the consumer.

14. The method according to one or both of Claims 12 and 13,
**characterized in that**
a module is switched on when the flow rate from the reservoir (150) to the consumer falls below a threshold value.

15. The method according to one or more of Claims 12 to 14,
**characterized in that**
a maximum value is specified for the pressure in the reservoir (150).

16. The method according to one or more of Claims 12 to 15,
**characterized in that**
all of the modules of the system are switched off above the maximum pressure value.

17. The method according to one or more of Claims 12 to 16,
**characterized in that**
a maximum value exists for the flow rate from the reservoir (150) to the consumer.

18. The method according to one or more of Claims 12 to 17,
**characterized in that**
at least another threshold value is specified for the pressure in the reservoir (150).

19. The method according to one or more of Claims 12 to 18,
**characterized in that**
a module is switched on when the pressure falls below a threshold value.

20. The method according to one or more of Claims 12 to 19,
**characterized in that**
the time sequence in which the modules are switched on can be varied.

21. The system according to Claim 2,
**characterized in that**
the reservoir (150) is fed according to the method of Claims 12 to 20.

## Revendications

1. Installation de production d'oxygène, comportant au moins deux modules (S1, ..., S5), une citerne de réserve (150) et une unité de commande,
**caractérisée en ce que**
les au moins deux modules (S1, ..., S5) alimentent une citerne de réserve (150), chaque module (S1, ..., S5) comprenant un premier compresseur pour l'entraînement d'un générateur d'oxygène (40) fonctionnant suivant le procédé d'absorption à changement de pression, le générateur d'oxygène (40) et un deuxième compresseur pour la post-compression d'un mélange gazeux produit et **en ce que** l'unité de commande procède à une mesure de pression dans la citerne de réserve (150) et active et désactive les modules (S1, ..., S5) indépendamment les uns des autres en fonction du résultat de la mesure de pression dans la citerne de réserve (150) pour alimenter en fonction des besoins la citerne de réserve (150).

2. Installation selon la revendication 1, comprenant en outre un réducteur de pression (160), un filtre à bactéries (170), un capteur de mesure de débit (180) et un capteur de mesure de concentration (190),
**caractérisée en ce que**
le mélange gazeux est conduit de la citerne de réserve à un consommateur (150), en passant par un réducteur de pression (160), un filtre à bactéries (170), un capteur de mesure de débit (180) et un capteur de mesure de concentration (190).

3. Installation selon une ou deux des revendications 1 et 2, comprenant en outre une unité,
**caractérisée en ce que**
l'unité compare à des valeurs seuils existantes le débit de la citerne de réserve (150) vers le consommateur, et génère un signal.

4. Installation selon une ou plusieurs des revendications 1 à 3,
**caractérisée en ce que**
le premier compresseur (20) aspire de l'air au travers d'un filtre d'aspiration (10) et le comprime.

5. Installation selon la revendication 4, comprenant en outre une unité,
**caractérisée en ce que**
le premier compresseur (20) comprime de l'air entre 1,5 et 3 bar.

6. Installation selon une ou plusieurs des revendications 1 à 5,
**caractérisée en ce que**
l'air est conduit dans le générateur d'oxygène PSA (40) en passant par un refroidisseur (30).

7. Installation selon une ou plusieurs des revendications 1 à 6,
**caractérisée en ce que**
les modules (S1, ..., S5) sont commandés par un pressostat (50).

8. Installation selon une ou plusieurs des revendications 1 à 7, comprenant en outre une soupape anti-retour (60), un régulateur (70) et une soupape magnétique (80).
**caractérisée en ce que**
un mélange gazeux est conduit du générateur d'oxygène PSA (40) au compresseur (90) en passant par la soupape anti-retour (60), le régulateur (70) et la soupape magnétique (80).

9. Installation selon une ou plusieurs des revendications 1 à 8,
**caractérisée en ce que**
le compresseur (90) est contrôlé par un pressostat (120).

10. Installation selon une ou plusieurs des revendications 1 à 9,
**caractérisée en ce que**
le compresseur (90) comprime le mélange gazeux entre 4 et 7 bar.

11. Installation selon une ou plusieurs des revendications 1 à 10, comprenant en outre une soupape de butée (110) et une soupape d'arrêt (130),
**caractérisée en ce que**
le mélange gazeux est conduit à la citerne de réserve (150), en passant par la soupape magnétique (80), la soupape de butée (110) et la soupape d'arrêt (130).

12. Procédé de commande d'une installation de production d'oxygène,
**caractérisé en ce que**
il présente au moins deux modules d'alimentation d'une citerne de réserve (50), constitués chacun d'un premier compresseur, qui entraîne un générateur d'oxygène fonctionnant suivant le procédé d'absorption à changement de pression, et du générateur d'oxygène et d'un deuxième compresseur qui post-comprime un mélange gazeux produit, et **en ce que** dans la citerne de réserve (50), on procède à une mesure de pression et qu'en fonction de la pression mesurée, un circuit de commande active et désactive les modules indépendamment les uns des autres en fonction des besoins.

13. Procédé selon la revendication 12,
**caractérisé en ce que**
il existe au moins une autre valeur seuil pour le débit de la citerne de réserve (50) vers le consommateur.

14. Procédé selon une ou deux des revendications 12 et 13,
**caractérisé en ce que**,
si une valeur seuil du débit de la citerne de réserve (150) vers le consommateur n'est pas atteinte, un module est activé.

15. Procédé selon une ou plusieurs des revendications 12 à 14,
**caractérisé en ce que**
il est prescrit une valeur maximale de pression dans la citerne de réserve (150).

16. Procédé selon une ou plusieurs des revendications 12 à 15,
**caractérisé en ce que**,
au dessus de la valeur maximale de pression, tous les modules de l'installation sont désactivés.

17. Procédé selon une ou plusieurs des revendications 12 à 16,
**caractérisé en ce que**
une valeur maximale existe pour le débit de la citerne de réserve (150) vers le consommateur.

18. Procédé selon une ou plusieurs des revendications 12 à 17,
**caractérisé en ce que**
il est prescrit au moins une autre valeur seuil de la pression dans la citerne de réserve (150).

19. Procédé selon une ou plusieurs des revendications 12 à 18,
**caractérisé en ce que**,
si une valeur seuil de pression n'est pas atteinte, un module est activé.

20. Procédé selon une ou plusieurs des revendications 12 à 19,
**caractérisé en ce que**
l'ordre d'activation des modules est modifiable dans le temps.

21. Procédé selon la revendication 2,
**caractérisé en ce que**
la citerne de réserve (150) est alimentée suivant le procédé des revendications 12 à 20.
